# EUROPEAN PATENT APPLICATION

(11) **EP 2 805 657 A1**
(43) Date of publication of application: **26.11.2014**
(21) Application number: 14380015.9
(22) Date of filing: 09.05.2014
(51) Int. Cl.: A47K 5/12, A45D 40/18, A63H 33/28, B65D 83/14, C11D 17/04, C11D 17/08

(54) **Liquid soap dispenser with incentive for use**

(30) Priority: 21.05.2013 ES 201330616 U
(71) Applicant: Blanchart I Falco, Raul, 08320 El Masnou (Barcelona) (ES)
(72) Inventor: Blanchart I Falco, Raul, 08320 El Masnou (Barcelona) (ES)
(74) Representative: Espiell Volart, Eduardo Maria

(57) **Abstract**

It consists of a transparent, semitransparent or opaque container (2) which internally incorporates, and in direct contact with the soapy liquid (3), an incentive for use (7) such as a toy, stickers, or similar, suitable to be easily removed from the container (2) once said liquid (3) has been consumed. The incentive for use (7) is disposed within a bag (8).

The container (2) provides an additional cover (9). The cap (5) also has a safety closure system.

## Description

### OBJECT OF THE INVENTION

The invention, as expressed in the heading of the present specification, relates to a dispenser or doser or another system of dispensing liquid soap with incentive for use, which provides, for the function for which it is intended, several advantages and innovative characteristics inherent to its configuration, which will be described in detail below and involve considerable novelty in its field of application.

The object of the present invention is centred on a container for liquid soap or gel which, essentially designed for children and being of the type formed by a container with a push-button or similar dispenser or dosing mechanism, has the innovative feature of incorporating therein an incentive for use such as a toy, stickers, tattoos or a small publication to encourage the habit of washing hands in children, as it is the reward they can access once the container's content has been consumed.

### FIELD OF APPLICATION OF THE INVENTION

The field of application of the present invention is included within the sector of the mass consumption and hygiene industry sector.

### BACKGROUND OF THE INVENTION

As is known, washing the hands with soap is one of the first and most effective hygiene methods, being a recommendable habit that everyone should perform often and thus avoid infection or diseases due to the elimination of bacteria present on any object one enters into direct contact with; but especially an essential habit for children who are usually more sensitive and, additionally, on playing with other children, in parks, in school playgrounds and on the ground, are always more in contact with elements that may contain bacteria.

However, as is well known, the work of parents and educators is often tedious and frustrating as it is difficult to instil in children the importance of frequently washing their hands, not only with water but with soap and water.

Therefore, it would be desirable to have means which encourage or incite children to wash their hands, preferably by the use of contraptions which attract their attention positively and with motivation.

The objective of the present invention is, thus, to provide the market with an innovative container which, in addition to containing the soap which makes it possible to avoid said infections, it is especially devised to encourage its use by children, for which reason it has an element incentivizing its use.

As a reference to the current state of the art, it should be mentioned that, although there are multiple types and models of dispensing containers on the market for all type of soap, gels and other children's hygiene products, at least by the applicant, the existence of no product is known which has the technical, structural, functional, motivating and constitutive characteristics similar to those discloses here and as claimed.

### EXPLANATION OF THE INVENTION

Thus, the dispenser or doser or another system for dispensing liquid soap with incentive for use that the invention proposes, is configured as a notable novelty within its field of applicable, since in accordance with its implementation and specifically, the aforementioned objectives are satisfactorily achieved, the characterizing details being those which make it possible and distinguish it, conveniently included in the final claims which accompany the specification thereof.

Specifically, what the invention proposes is, as already stated, a dispenser or doser of liquid soap which encourages the use of the habit of washing hands, for which purpose, unlike other containers, it has the special characteristic of having an incentive for use inside such as a toy, stickers, tattoos or a small publication which encourages the user, particularly children, to wash their hands frequently to finish the soap as soon as possible and have access to the toy.

Preferably, the dosing container has a transparent or semitransparent receptacle, so that the child can see the inner soap content, and the level that goes down with use, as well as the toy contained therein.

Said incentive for use such as a toy, stickers, tattoos or a small publication, which may consist of any type of element, doll, figure or similar, may either be incorporated inside the container in direct contact with the liquid soap, or be incorporated, in turn, inside a bag, case or protective container, which will also preferably be transparent.

Furthermore, the container which has a push-button or similar dispensing or dosing mechanism of the liquid contained therein, will also have, preferably, a safety closure system, for example with a safety screw cap of the type which are used in drugs or other containers and bottles to avoid them from being opened by children, in this case with the purpose that the child cannot empty the container content by himself to directly access the toy.

It is also convenient to highlight that the diameter of the container opening must be sufficiently wide so that the toy can be easily introduced by the manufacturer and, when the content is consumed, removed by the user through it.

In an alternative option, it contemplates the possible that the container has an additional cover, independent of the dispensing mouth, for the introduction and extraction of the toy, for example, formed by the lower base, in any case it also has safe closure means, for example, by pressure, or also with safety screw cap, to prevent children from being able to open it easily.

The described liquid soap dispenser with incentive for use consists, thus, of an innovative structure of structural and constitutive characteristics unknown until now for the purpose intended, reasons which, together with its practical use, give it sufficient reasons to be able to obtain the privilege of exclusiveness applied for.

### DESCRIPTION OF THE DRAWINGS

To complement the description being made and in order to aid towards a better understanding of the characteristics of the invention, a set of drawings is attached as an integral part of said description wherein, with illustrative and non-limiting character, the following has been represented
- Figure number 1: Shows an elevational view of an embodiment of the liquid soap dispenser with incentive for use, object of the invention, showing the parts and essential elements it comprises; and
- Figure number 2: Shows an elevational view of another example of embodiment of the liquid soap dispenser with incentive for use, according to the invention.

### PREFERRED EMBODIMENT OF THE INVENTION

In light of said figures, and in accordance with the numbering adopted, an example of preferred, but non-limiting, embodiment can be observed in them of the liquid soap dispenser with incentive for use, object of the invention, which comprises the parts and elements indicated and are described below.

Thus, as observed in said figures, the dispenser (1) in question, consists, conventionally, of a container (2) containing a liquid (3), preferably, soapy, which has in its upper part a push-button (4), or similar dosing mechanism of said liquid, incorporated in a cap (5) which closes its upper opening (6).

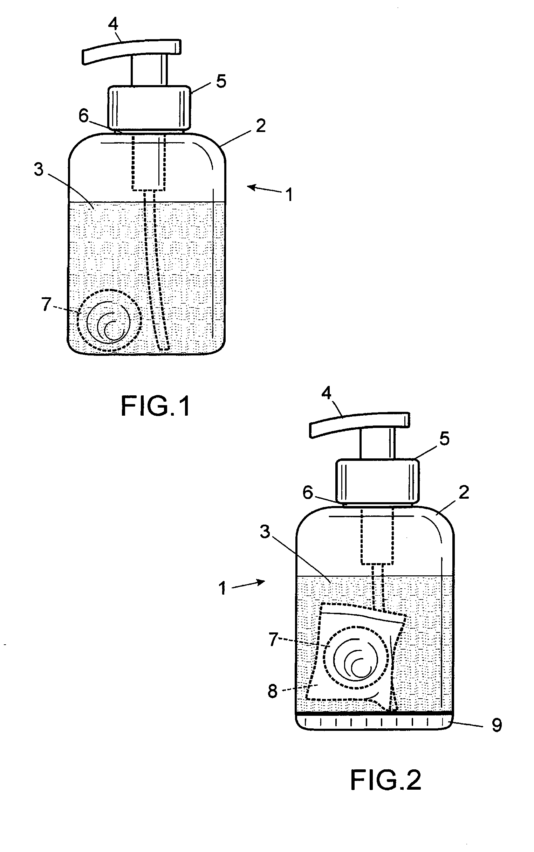

Said container (2), and now characterizing, internally incorporates an incentive for use (7) such as a toy, stickers, tattoos or a small publication which is either disposed, as shown in figure 1, in direct contact with the liquid (3), or, as shown in figure 2, it is disposed incorporated within a bag (8) or another protective wrapping.

In any case, said incentive for use (7), and where applicable the incentive for use (7) and the bag (8) or wrapping, is of a size suitable for being easily removed from the container (2) once the soapy liquid (3) has been consumed, which can be performed either by making it pass through the upper opening (6), for which purpose this will have the diameter in accordance with the dimensions of the incentive for use (7), or through an additional cover (9) expressly provided for said extraction of the incentive for use (7), for example, as shown in figure 2, constituting the part which forms the lower base of the container (2).

Preferably, the container (2) is transparent or semitransparent, to make it possible to see the liquid (3) content and the inner incentive for use (7).

Furthermore, also preferably, the cap (5) is a cap with safety closure system, and, where applicable, the additional cover (9), also has a safety closure system, for example, by pressure or safety screw cap.

Having sufficiently described the nature of the present invention, as well as the manner of putting it into practice, it is not considered necessary to give further explanation in order for any person skilled in the art to understand its scope and the advantages derived therefrom, stating that, within is essential nature, it can be put into practice in other forms of embodiment that differ in details from those indicated by way of example, and whereto protection claimed will equally cover, provided that its main principle is not altered, changed or modified.

## Claims

1. Liquid soap dispenser with incentive for use which, being of the type which consists of a container (2) containing a liquid (3) and a cap (5) which closes its upper opening (6) with optionally a push-button (4), or similar dosing mechanism of said liquid, is **characterized in that** said container (2) internally incorporates an incentive for use (7) such as a toy, stickers, tattoos or a small publication suitable for being easily removed from the container (2) once the soapy liquid (3) has been consumed.

2. Liquid soap dispenser with incentive for use, according to claim 1, **wherein** the incentive for use (7) is disposed inside the container (2) in direct contact with the liquid (3).

3. Liquid soap dispenser with incentive for use, according to claim 1, **wherein** the incentive for use (7) is disposed inside the container (2) incorporated inside a protective wrapping.

4. Liquid soap dispenser with incentive for use, according to claim 3, **wherein** the protective wrapping is a bag (8).

5. Liquid soap dispenser with incentive for use, according to any of claims 1 to 4, **wherein** the upper opening (6) of the container (2) has a diameter in accordance with the dimensions of the incentive for use (7), so that said incentive for use (7) is suitable to be removed by making it pass through said upper opening (6).

6. Liquid soap dispenser with incentive for use, according to any of claims 1 to 5, **wherein** in the container (2) an additional cover (9) for the extraction of the incentive for use (7) has been provided.

7. Liquid soap dispenser with incentive for use, according to claim 6, **wherein** the additional cover (9) is the part which forms the lower base of the container (2).

8. Liquid soap dispenser with incentive for use, according to any of claims 1 to 7, **wherein** the container (2) is transparent.

9. Liquid soap dispenser with incentive for use, according to any of claims 1 to 7, **wherein** the container (2) is semitransparent.

10. Liquid soap dispenser with incentive for use, according to any of claims 1 to 7, **wherein** the container (2) is opaque.

11. Liquid soap dispenser with incentive for use, according to any of claims 1 to 10, **wherein** the cap (5) is a cap with safety closure system.

12. Liquid soap dispenser with incentive for use, according to any of claims 6 or 7, **wherein** the additional cover (9) has a safety closure system.
